# EUROPEAN PATENT APPLICATION

(11) **EP 4 693 038 A1**
(43) Date of publication of application: **11.02.2026**
(21) Application number: 24847745.7
(22) Date of filing: 31.05.2024
(51) Int. Cl.: G06F 9/451

(54) **APPLICATION MANAGEMENT AND CONTROL METHOD AND ELECTRONIC DEVICE**

(30) Priority: 31.07.2023 CN 202310955890
(71) Applicant: Huawei Technologies Co., Ltd., Shenzhen, Guangdong 518129 (CN)
(72) Inventor: WAN, Duomiao, Shenzhen, Guangdong 518129 (CN); JING, Xiangkun, Shenzhen, Guangdong 518129 (CN)
(74) Representative: Pfenning, Meinig & Partner mbB
(86) International application number: PCT/CN2024/096658
(87) International publication number: WO 2025/025782

(57) **Abstract**

Embodiments of this application provide an application management and control method and an electronic device. The electronic device stores a correspondence between at least one management and control condition and a management and control result, and each management and control condition corresponds to one management and control result. In the method, when receiving a first trigger operation entered by a user in a first interface, the electronic device may determine a first management and control condition based on first application information corresponding to a first application and/or second application information corresponding to a second application. The first trigger operation indicates to jump to and display a second interface. The first interface corresponds to the first application, the second interface corresponds to the second application, and the first application is different from the second application. The electronic device may execute a corresponding response based on a management and control result corresponding to the first management and control condition, to determine whether to jump to and display the second interface. This can reduce a quantity of times that the electronic device is attacked due to app jumping, and improve security.

## Description

This application claims priority to Chinese Patent Application No. 202310955890.0, filed with the China National Intellectual Property Administration on July 31, 2023, and entitled "APPLICATION MANAGEMENT AND CONTROL METHOD AND ELECTRONIC DEVICE", which is incorporated herein by reference in its entirety.

### TECHNICAL FIELD

This application relates to the field of terminal technologies, and in particular, to an application management and control method and an electronic device.

### BACKGROUND

With development of electronic technologies and a mobile internet, various applications (applications, apps) may be installed in an electronic device. A user may enter, in an interface corresponding to an app, a trigger operation indicating app jumping. After detecting the trigger operation of the user, the electronic device may perform app jumping. In other words, the electronic device may start another app, and display an interface corresponding to the another app.

App jumping may be randomly performed in an app to switch to display an interface corresponding to another app. Therefore, if a malicious program, for example, a virus, a malicious plug-in, or a marketing advertisement is written into the app after jumping, the electronic device may be attacked, and there is a security risk.

### SUMMARY

Embodiments of this application provide an application management and control method, to reduce a risk that an electronic device is attacked due to app jumping.

To achieve the foregoing objective, the following technical solutions are used in embodiments of this application.

According to a first aspect, an embodiment of this application provides an application management and control method, applied to an electronic device. The electronic device stores a correspondence between at least one management and control condition and a management and control result. Each management and control condition corresponds to one management and control result. The method includes:
receiving a first trigger operation for a first interface, where the first interface corresponds to a first application, the first trigger operation indicates to jump to and display a second interface, the second interface corresponds to a second application, and the first application is different from the second application; determining a first management and control condition from the at least one management and control condition based on first application information corresponding to the first application and/or second application information corresponding to the second application in response to the first trigger operation; displaying first prompt information based on a management and control result corresponding to the first management and control condition, where the first prompt information indicates to obtain permission to jump to and display the second interface; receiving a second trigger operation for the first prompt information, where the second trigger operation indicates to allow jumping to and displaying the second interface; and jumping to and displaying the second interface in response to the second trigger operation.

In the method in this application, the electronic device may determine the first management and control condition based on the first application information corresponding to the first application and/or the second application information corresponding to the second application, to further determine the management and control result corresponding to the first management and control condition. The first prompt information used to obtain the permission from a user to jump to and display the second interface may be displayed based on the management and control result corresponding to the first management and control condition. After authorization of the user is obtained, the second interface may be jumped to and displayed. This can reduce a quantity of times that the electronic device is attacked due to app jumping, and improve security.

With reference to the first aspect, in a possible design, the first application information includes at least one of an application type and an authentication type of the first application, and call permission of the first application for the second application. The second application information includes at least one of an authentication type, an advertisement type, and a jump control type of the second application, and a home type of the second application. The first interface includes an advertisement and a jump control that are associated with the second application, and the jump control type is a type of the jump control that is associated with the second application and that is included in the first interface. The advertisement type of the second application is a type of the advertisement that is associated with the second application and that is included in the first interface.

With reference to the first aspect, in a possible design, a third trigger operation for the first prompt information is received, where the third trigger operation indicates to forbid jumping to and displaying the second interface. In response to the third trigger operation, the first prompt information is closed, and the first interface is kept displayed.

In this solution, if the electronic device receives, after displaying the first prompt information, the third trigger operation indicating to forbid jumping to and displaying the second interface, interface jumping may not occur, and the first interface is still kept displayed. This can reduce a quantity of times that the electronic device is attacked due to app jumping, and improve security.

With reference to the first aspect, in a possible design, the management and control result includes a first management and control result, a second management and control result, and a third management and control result. The first management and control result indicates to display prompt information, the second management and control result indicates to forbid interface jumping, and the third management and control result indicates to perform interface jumping. If the management and control result corresponding to the first management and control condition is the first management and control result, the first prompt information is displayed in the first interface.

In this solution, possible implementations of a plurality of the management and control results are provided. The electronic device may perform corresponding responses based on different received management and control results.

With reference to the first aspect, in a possible design, if the management and control result corresponding to the first management and control condition is the second management and control result, the first interface is kept displayed. If the management and control result corresponding to the first management and control condition is the third management and control result, the second interface is jumped to and displayed.

In this solution, the electronic device can directly jump to and display the second interface only when the management and control result corresponding to the first management and control condition is the third management and control result. When the management and control result corresponding to the first management and control condition is not the third management and control result, the electronic device does not jump to and display the second interface or jumps to and displays the second interface after obtaining authorization of the user. This can reduce a quantity of times that the electronic device is attacked due to the app jumping, and improve security.

With reference to the first aspect, in a possible design, a fourth trigger operation for the second interface is received. The fourth trigger operation indicates to jump to and display a third interface, and the third interface corresponds to a third application. The third application is different from the second application. In response to the fourth trigger operation, a second management and control condition is determined from the at least one management and control condition based on the second application information corresponding to the second application and/or third application information corresponding to the third application.

Second prompt information is displayed based on a management and control result corresponding to the second management and control condition, where the second prompt information indicates to obtain permission to jump to and display the third interface.

In this solution, the second application may be used as both a callee application and a caller application. When receiving a fourth trigger operation entered by a user in the second interface, the electronic device may determine the second management and control condition based on the second application information corresponding to the second application and/or the third application information corresponding to the third application, and perform a corresponding response based on the management and control result corresponding to the second management and control condition. This can reduce a quantity of times that the electronic device is attacked due to app jumping, and improve security.

With reference to the first aspect, in a possible design, if a target management and control condition in the at least one management and control condition is that a caller application has call permission on a callee application, a management and control result corresponding to the target management and control condition indicates to perform interface jumping; or if a target management and control condition in the at least one management and control condition is that a caller application does not have call permission on a callee application, a management and control result corresponding to the target management and control condition indicates to forbid interface jumping.

In this solution, a plurality of correspondences between management and control conditions and management and control results are provided.

With reference to the first aspect, in a possible design, if the target management and control condition in the at least one management and control condition is that a jump control type of a caller application is a bypass link type, a management and control result corresponding to the target management and control condition indicates to display prompt information.

In this solution, a correspondence between a management and control condition and a management and control result is provided.

With reference to the first aspect, in a possible design, the management and control condition is obtained through orchestration based on at least one preset command.

In this solution, the preset command used to edit the management and control condition is a command customized in this application. A plurality of preset conditions may be obtained based on a combination of different commands.

With reference to the first aspect, in a possible design, the electronic device obtains the at least one management and control condition from a server based on a preset time cycle.

In this solution, the electronic device may periodically obtain a management and control condition from the server, to update a locally stored management and control condition, so that the management and control condition can be directly called subsequently, and invocation time is saved.

With reference to the first aspect, in a possible design, the electronic device includes an application management service module and an ecosystem management service module, and a system application is installed in the electronic device. After the electronic device receives the first trigger operation for the first interface, the application management service module obtains the first application information corresponding to the first application and second application information corresponding to the second application. The ecosystem management service module determines the first management and control condition from the at least one management and control condition based on the first application information and/or the second application information. The ecosystem management service module obtains, based on the correspondence between the at least one management and control condition and the management and control result, the management and control result corresponding to the first management and control condition. If the management and control result indicates to perform interface jumping, the system application jumps to and displays the second interface.

In this solution, an internal implementation of performing a corresponding response by the electronic device based on the management and control result is provided.

With reference to the first aspect, in a possible design, if the management and control result indicates to display prompt information, the system application displays the first prompt information. If the management and control result indicates to forbid interface jumping, the system application displays the first interface. If the management and control result indicates to perform interface jumping, the first application jumps to and displays the second interface.

In this solution, another internal implementation of performing a corresponding response by the electronic device based on the management and control result is provided.

According to a second aspect, an embodiment of this application provides an electronic device. The electronic device includes a memory and one or more processors. The memory is coupled to the processor. The memory is configured to store computer program code. The computer program code includes computer instructions. When the processor executes the computer instructions, the electronic device is enabled to perform the method according to any one of the first aspect and the possible designs of the first aspect.

According to a third aspect, an embodiment of this application provides a chip system. The chip system includes one or more interface circuits and one or more processors. The interface circuit and the processor are interconnected by using a line. The interface circuit is configured to: receive a signal from a memory of an electronic device, and send the signal to the processor. The signal includes computer instructions stored in the memory. When the processor executes the computer instruction, the electronic device performs the method according to any one of the first aspect and the possible designs of the first aspect.

According to a fourth aspect, an embodiment of this application provides a computer-readable storage medium, including computer instructions. When the computer instructions are run on an electronic device, the electronic device is enabled to perform the method according to any one of the first aspect and the possible designs of the first aspect.

According to a fifth aspect, an embodiment of this application provides a computer program product. When the computer program product runs on a computer, the computer is enabled to perform the method according to any one of the first aspect and the possible designs of the first aspect.

### BRIEF DESCRIPTION OF DRAWINGS

FIG. 1A(a) and FIG. 1A(b) are diagrams of an application jump scenario according to the conventional technology;
FIG. 1B(a) and FIG. 1B(b) are diagrams of another application jump scenario according to the conventional technology;
FIG. 2A is a diagram of an implementation of application jumping according to the conventional technology;
FIG. 2B is a diagram of another implementation of application jumping according to the conventional technology;
FIG. 3 is a diagram of a hardware structure of an electronic device according to an embodiment of this application;
FIG. 4 is a diagram of a software structure of an electronic device according to an embodiment of this application;
FIG. 5A and FIG. 5B are diagrams of application interfaces according to an embodiment of this application;
FIG. 6A(a) and FIG. 6A(b) are diagrams of interface switching of a type of application jumping according to an embodiment of this application;
FIG. 6B(a) and FIG. 6B(b) are diagrams of interface switching of another type of application jumping according to an embodiment of this application;
FIG. 6C(a) and FIG. 6C(b) are diagrams of interfaces in which app jumping does not occur according to an embodiment of this application;
FIG. 7 is a diagram of a management and control system of an application according to an embodiment of this application;
FIG. 8A and FIG. 8B are a diagram of an interaction between an electronic device and a server according to an embodiment of this application;
FIG. 9 is a diagram of an interaction between an ecosystem management service module and an application management service module according to an embodiment of this application; and
FIG. 10 is a diagram of an electronic device according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

In the following descriptions, the terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

With development of electronic technologies and mobile internet, various apps may be installed in an electronic device, and a user may perform social networking, shopping, resource obtaining, and the like by using the apps installed in the electronic device. Cooperation may exist between the different apps. The user may perform a trigger operation (for example, tap a control or a link) in an interface corresponding to an app. After detecting the trigger operation of the user, the electronic device may perform app jumping. To be specific, the electronic device may start another app, and display an interface corresponding to the another app.

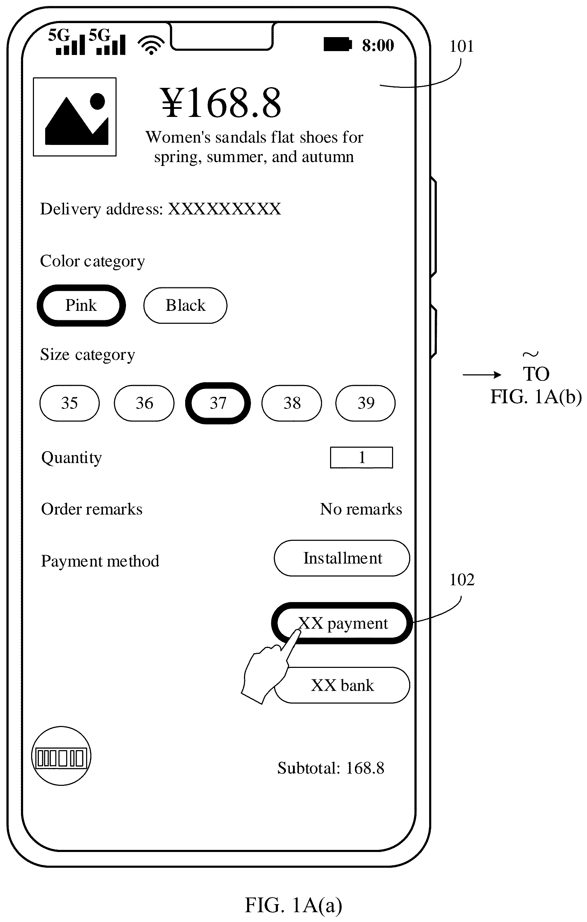

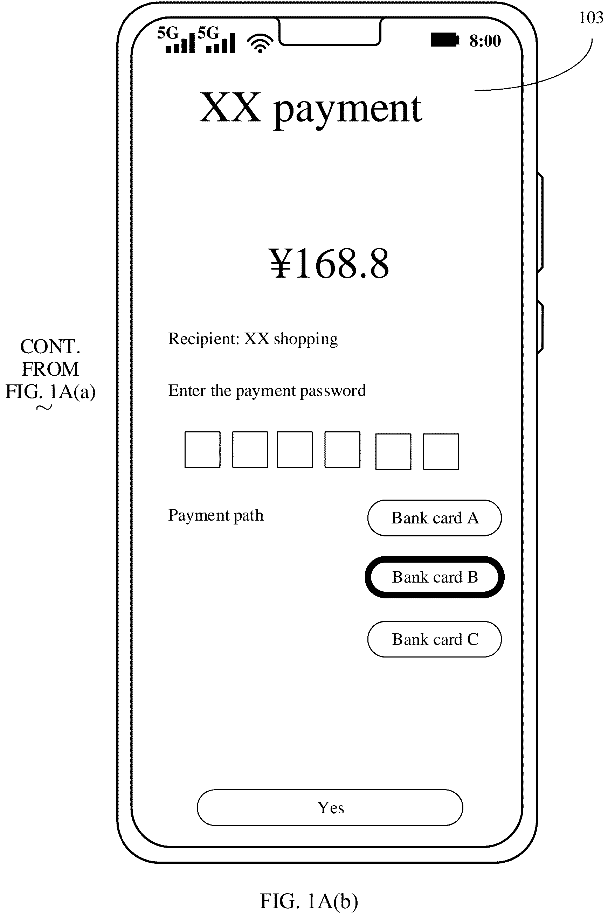

For example, refer to FIG. 1A(a) and FIG. 1A(b). When a shopping app runs on an electronic device, a shopping interface 101 may be displayed. The shopping interface 101 includes a payment control 102 corresponding to a payment app. When detecting an input selection operation on the payment control 102, the electronic device may perform app jumping. In other words, the electronic device may start the payment app, and display a payment interface 103 corresponding to the payment app.

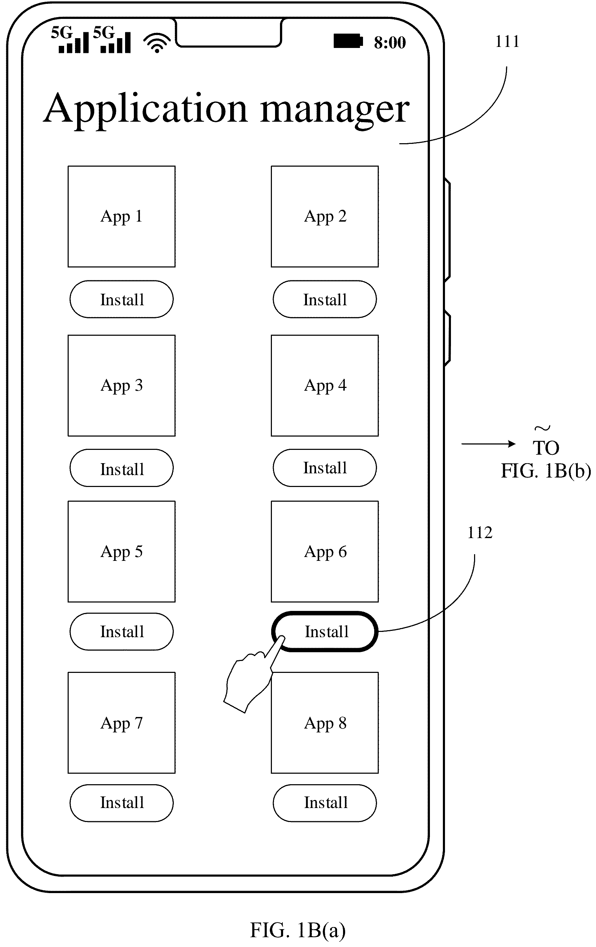

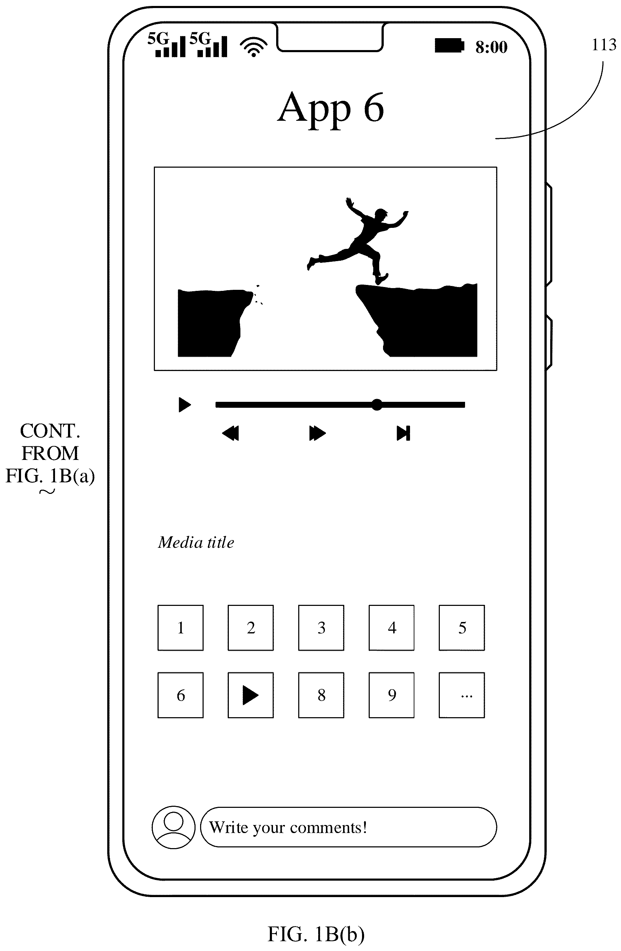

For another example, refer to FIG. 1B(a) and FIG. 1B(b). When an application manager app runs on the electronic device, an application installation interface 111 may be displayed. The application installation interface 111 includes an installation control 112 used to install a target app. When detecting an input selection operation on the installation control 112, the electronic device may perform app jumping. In other words, the electronic device may install the target app. After completing installation of the target app, the electronic device may start the target app, and display an interface 113 corresponding to the target app.

In this embodiment of this application, a control that triggers app jumping of the electronic device, for example, the payment control or the installation control, may be referred to as a jump control. A display interface corresponding to an app may include a plurality of jump controls, and the jump controls may include a malicious jump control, for example, a malicious jump control that triggers the electronic device to install a bundled app, to enable the electronic device to jump to and display an interface corresponding to the bundled app. If a user performs a selection operation on the malicious jump controls, the electronic device performs app jumping. If a malicious program, for example, a virus, a malicious plug-in, or a marketing advertisement is written into an app after jumping, the electronic device may be attacked, and there is a security risk.

In a related technology, a static rule may be set for each app installed in the electronic device. An app 1 is used as an example. A static rule set for the app 1 may include whether a component in the app 1 is open to the outside, whether another app is allowed to access the app 1, specific system permission that can be used by the app 1, a permission level of each system permission used by the app 1, and the like.

When receiving an event that triggers app jumping, for example, when receiving an event that triggers jumping from the app 1 to an app 2, the electronic device may determine, based on the static rule corresponding to the app 1 and/or a static rule corresponding to the app 2, whether to perform jumping.

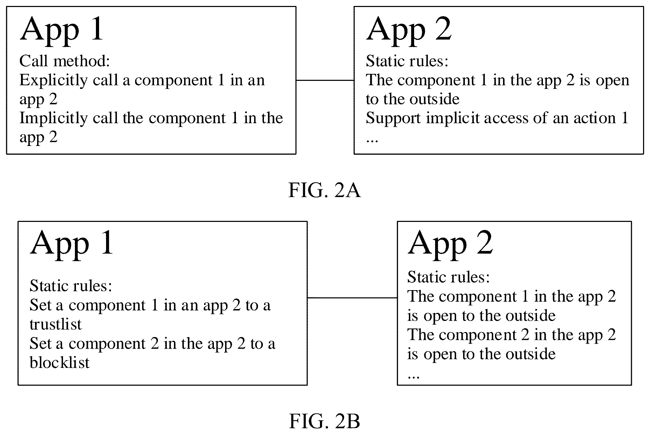

For example, refer to FIG. 2A. The static rule set for the app 2 may include that a component 1 in the app 2 is open to the outside. Because the component 1 in the app 2 is open to the outside, when the electronic device receives the event that triggers jumping from the app 1 to the app 2, the app 1 may explicitly call the component 1 in the app 2 by using a system of the electronic device. In other words, the app 1 may directly access or start a page corresponding to the component 1 in the app 2.

Alternatively, still refer to FIG. 2A. The static rule set for the app 2 may further include that the app 2 supports an action (which may also be referred to as an action in this embodiment of this application) 1 of implicit access. Because the app 2 supports the action 1 of implicit access, when the electronic device receives the event that triggers jumping from the app 1 to the app 2, the app 1 may implicitly call the component 1 in the app 2 by using the system of the electronic device. In other words, the app 1 may access or start, through the action 1, a page corresponding to an open component (for example, the component 1) in the app 2.

For another example, refer to FIG. 2B. The static rule set for the app 2 may include that the component 1 in the app 2 is open to the outside. The static rule set for the app 1 may include that the component 1 in the app 2 is set to a trustlist. In other words, the app 1 is allowed to access the component 1 in the app 2. Because the component 1 in the app 2 is open to the outside, and the app 1 is allowed to access the component 1 in the app 2, when the electronic device receives the event that triggers jumping from the app 1 to the app 2, the app 1 may directly call the component 1 in the app 2. In other words, the app 1 may directly access or start the page corresponding to the component 1 in the app 2.

Alternatively, still refer to FIG. 2B. The static rule set for the app 2 may include that a component 2 in the app 2 is open to the outside. The static rule set for the app 1 may include that the component 2 in the app 2 is set to a blocklist. In other words, the app 1 is not allowed to access the component 2 in the app 2. Although the component 2 in the app 2 is open to the outside, because the app 1 is not allowed to access the component 2 in the app 2, when the electronic device receives the event that triggers jumping from the app 1 to the app 2, the app 1 cannot call the component 2 in the app 2. In other words, the app 1 cannot access or start the page corresponding to the component 2 in the app 2.

Although the foregoing method may be used to manage and control, based on the static rule set for each app installed in the electronic device, whether the electronic device performs app jumping when the electronic device receives the event that triggers app jumping, the foregoing method is not applicable to some special scenarios. For example, when the electronic device receives the event that triggers jumping from the app 1 to the app 2, if the app 2 is not an app installed in the electronic device, there is no static rule set for the app 2 in the electronic device. In this scenario, because the electronic device cannot manage and control whether to perform app jumping, the electronic device directly jumps from the app 1 to the app 2. If a malicious program, for example, a virus, a malicious plug-in, or a marketing advertisement is written into the app 2, the electronic device may still be attacked, and a security risk exists.

Based on the foregoing problem, an embodiment of this application provides an application management and control method. The method can determine a target management and control condition and a management and control result corresponding to the target management and control condition based on application information of a caller application and application information of a callee application, to manage and control, when an input instruction indicating app jumping is received, whether to perform app jumping. This can reduce a risk that the electronic device is attacked due to app jumping, and improve security of the electronic device.

The application management and control method provided in embodiments of this application may be applied to the electronic device. For example, the electronic device in embodiments of this application may be a portable computer (for example, a mobile phone), a tablet computer, a laptop, a personal computer (personal computer, PC), a wearable electronic device (for example, a smartwatch), an augmented reality (augmented reality, AR)\virtual reality (virtual reality, VR) device, a vehicle-mounted computer, or the like. A specific form of the electronic device is not specially limited in the following embodiments.

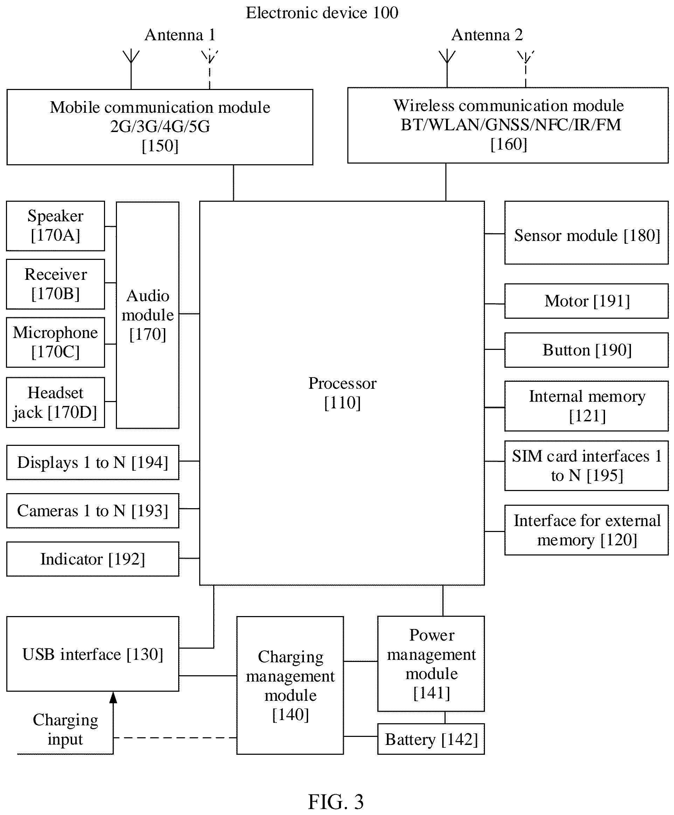

FIG. 3 is a diagram of a structure of an electronic device 100. As shown in FIG. 3, the electronic device 100 may include a processor 110, an interface for external memory 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly call the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The interface for external memory 120 may be configured to connect to an external storage card, for example, a micro SD card, to extend a storage capability of the electronic device 100. The external memory card communicates with the processor 110 through the interface for external memory 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to implement various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (for example, audio data and a phone book) and the like created when the electronic device 100 is used. In addition, the internal memory 121 may include a high-speed random access memory, and may further include a non-volatile memory, for example, at least one magnetic disk storage component, a flash memory component, or a universal flash storage (universal flash storage, UFS).

A software system of the electronic device 100 may use a layered architecture, an event-driven architecture, a microkernel architecture, a micro service architecture, or a cloud architecture. In the embodiments of the present invention, an Android system of a layered architecture is used as an example to illustrate a software structure of the electronic device 100.

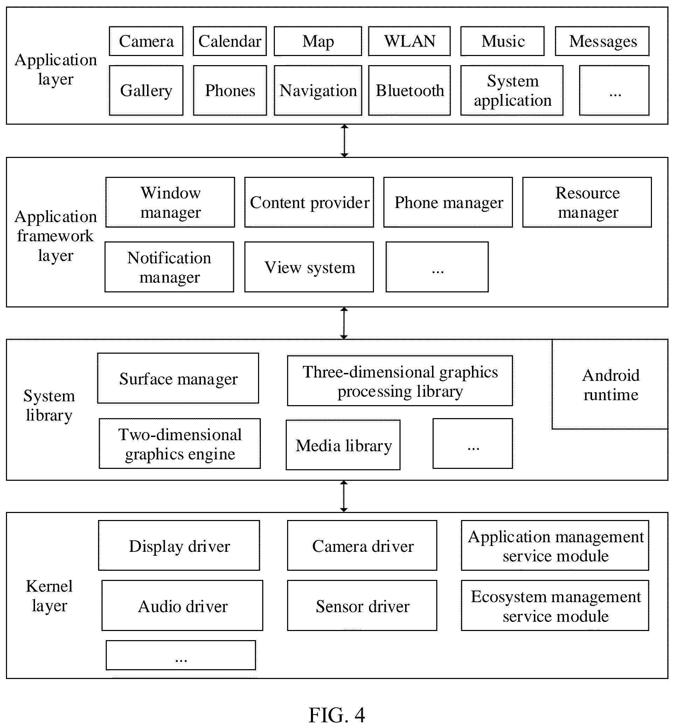

FIG. 4 is a block diagram of a software structure of an electronic device 100 according to an embodiment of the present invention.

In the layered architecture, software is divided into several layers. Each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 4, an application package may include applications such as Camera, Gallery, Calendar, Phone, Map, Navigation, WLAN, Bluetooth, Music, Video, and Messages. There may be cooperation between applications. For example, a display interface corresponding to an application may include a jump control used to jump to a display interface corresponding to another application.

The application framework layer provides an application programming interface (application programming interface, API) and a programming framework for an application at the application layer. The application framework layer includes some predefined functions.

As shown in FIG. 4, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system can be used to build an application. A display interface may include one or more views. For example, a display interface including an SMS message notification icon may include a text display view and an image display view.

The phone manager is configured to provide a communication function of the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without a user interaction. For example, the notification manager is configured to notify download completion, give a message notification, and the like. The notification manager may alternatively be a notification that appears in a top status bar of the system in a form of a graph or a scroll bar text, for example, a notification of an application that runs in a background, or may be a notification that appears on the screen in a form of a dialog window. For example, text information is prompted in the status bar, an alert sound is played, the electronic device vibrates, or an indicator blink.

The Android runtime includes a core library and a virtual machine. The Android runtime is responsible for scheduling and management of the Android system.

The core library includes two parts: a function that needs to be called in Java language and a core library of Android.

The application layer and application framework layer run in the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, such as a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

In some embodiments, the application layer may further include a system application, and the kernel layer may further include an application management service module and an ecosystem management service module.

The application management service module is configured to detect an app jumping scenario, and request, from the ecosystem management service module when detecting the app jumping scenario, to obtain a management and control result.

The ecosystem management service module is configured to determine a target management and control condition from at least one management and control condition based on application information of an application associated with app jumping, and determine a management and control result corresponding to the target management and control condition.

The at least one management and control condition is obtained by the system application from a server based on a preset time cycle. Alternatively, the at least one management and control condition may be preset in the system application.

After obtaining the management and control result determined by the ecosystem management service module, the application management service module is further configured to respond to the management and control result. For example, if the management and control result determined by the ecosystem management service module indicates to display prompt information, the application management service module sends, to the system application, an instruction indicating to display the prompt information. For another example, if the management and control result determined by the ecosystem management service module indicates to forbid interface jumping, the application management service module sends, to the system application, an instruction indicating to forbid interface jumping. Alternatively, if the management and control result determined by the ecosystem management service module indicates to perform interface jumping, the application management service module sends, to the first application, an instruction indicating to perform interface jumping.

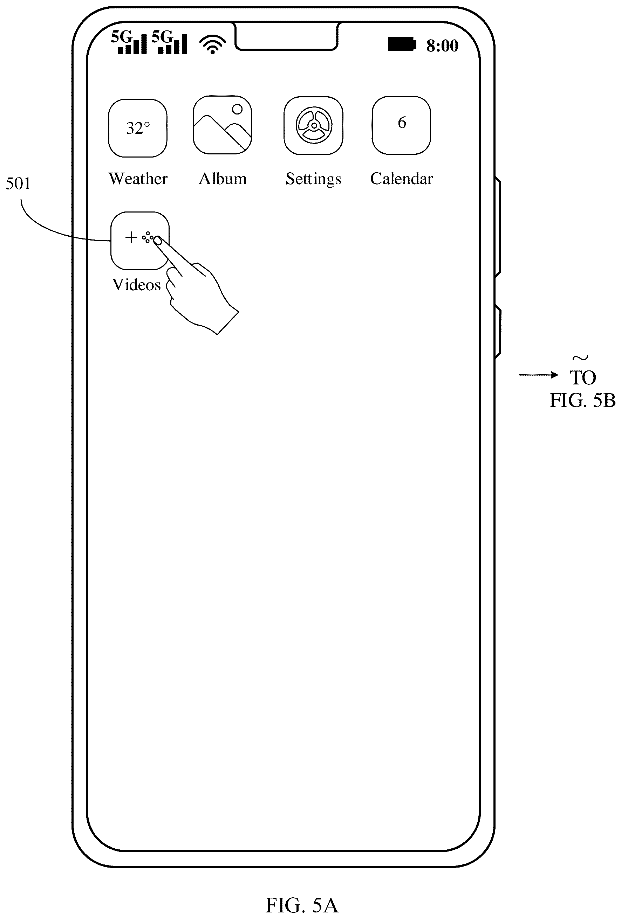

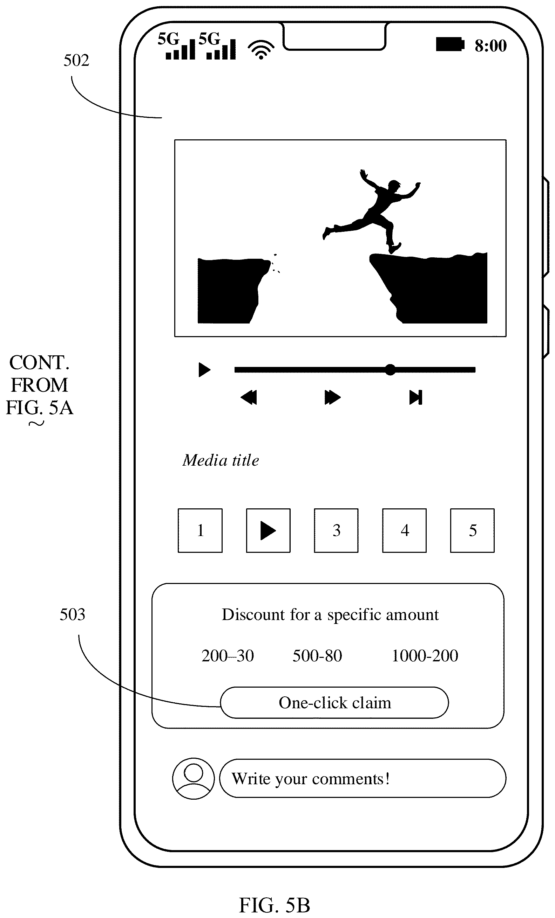

In some embodiments, a plurality of apps may be installed on the electronic device. A user may perform a tap or select operation on any app, to indicate the electronic device to start the app. After starting the app, the electronic device may display an application interface corresponding to the app. For example, refer to FIG. 5A and FIG. 5B. After receiving a tap or select operation that is entered by the user for an application 501, the electronic device may start the application 501, and display an application interface 502 corresponding to the application 501.

In some embodiments, cooperation may exist between applications, to implement an objective of traffic diversion or promotion. For example, an application interface corresponding to an application includes a jump control of another application. The user may enter a trigger operation for the jump control into the electronic device, to indicate the electronic device to perform application jumping, so as to display an application interface of the another application. After receiving the trigger operation that is entered by the user for the jump control, the electronic device may determine, in response to the trigger operation, whether to jump to and display the application interface of the another application.

For ease of description, in this embodiment of this application, an application interface displayed by the electronic device before app jumping may be referred to as a first interface, and an app corresponding to the first interface is referred to as a first application. An application interface displayed by the electronic device after app jump may be referred to as a second interface, and an app corresponding to the second interface is referred to as a second application. The first application is different from the second application. In addition, a trigger operation that is entered by the user for a jump control in the first interface and that is received by the electronic device may be referred to as a first trigger operation, and the first trigger operation indicates to jump to and display the second interface.

For example, still refer to FIG. 5A and FIG. 5B. The application interface 502 includes a jump control 503 corresponding to the second application. The user may tap the jump control 503 to enter the first trigger operation for the jump control 503 into the electronic device. In response to the received first trigger operation, the electronic device may determine whether to jump to and display the application interface of the second application.

In some embodiments, in response to the first trigger operation, the electronic device may obtain first application information corresponding to the first application and second application information corresponding to the second application. A first management and control condition is determined from the at least one management and control condition based on the first application information corresponding to the first application and/or the second application information corresponding to the second application.

Refer to Table 1. In some embodiments, the first application information may include at least one of an application type and an authentication type of the first application, and call permission (which may also be referred to as a blocklist type in embodiments of this application) of the first application for the second application.

It should be noted that the first application information may further include a package name of the first application, an account ID of an account logged in to the first application, a process ID of the first application, an application parameter (for example, a param parameter, an action parameter, or a uir parameter) of the first application, and the like. This is not limited in embodiments of this application.

The second application information may include at least one of an authentication type, an advertisement type, and a jump control type of the second application, and a home type (which may also be referred to as a household register type in embodiments of this application) of the second application.

An application type is a service attribute of a corresponding app. The application type may include at least one of a HarmonyOS app, a non-wide-caliber atomic service, an Android app, a quick app, a wide-caliber atomic service, and the like.

An authentication type represents a type of a platform that authenticates a corresponding app. Before an app is released to a platform, for example, an app market or a service market, the corresponding platform authenticates the app to check whether related information of the app meets a release regulation. Types of these platforms used to check whether related information of apps meets the release regulation are authentication types of the apps. The authentication type may include at least one of an app market, a service market, the leftmost screen, a quick app center, internal authentication media, external authentication media, and other authentication media.

The blocklist type may include at least one of a blocklist and a non-blocklist. The blocklist means that the corresponding first application has the permission to call the second application, and the non-blocklist means that the corresponding first application does not have the permission to call the second application.

The household register type may include at least one of a same application series, a same developer, and a same developer cluster. The same application series means that there is a direct association between the corresponding first application and the second application. For example, if the first application is a version 1.0 of a game application, and the second application is a version 2.0 of the game application, there is a direct association between the first application and the second application, and the second application and the first application are in a same application series. For another example, if the first application is a shopping application, and the second application is a payment application used to support payment on the shopping application, there is a direct association between the first application and the second application, and a household register type of the second application for the first application is the same application series.

The same developer means that developers of the first application and the second application are the same. For example, if both the first application and the second application are developed by a developer 1, the household register type of the second application for the first application is the same developer.

The same developer cluster means that developers of the first application and the second application belong to a same development team. For example, the first application is developed by a developer 1, and the second application is developed by a developer 2. If the developer 1 and the developer 2 belong to a development team 1, the household register type of the second application for the first application is the same developer cluster.

The jump control type represents a type of a jump control that is associated with the second application and that is included in the first interface. The jump control type may include at least one of a details page link that is opened for an app in the household register of the first application, a bypass link, another link, and a quick app link. The app in the household register of the first application is an app that is in a same series as the first application, an app that is developed by a same developer as the first application, an app that is in a same developer cluster as the first application, or the like. This is not limited in embodiments of this application.

The advertisement type represents a type of an advertisement that is associated with the second application and that is included in the first interface. The advertisement type may include at least one of an application monetization advertisement (AGD Pro) type and a marketing advertisement (ADS (PPS)) type.

It should be noted that the second application information may further include a package name of the second application, an account ID of an account logged in to the second application, a process ID of the second application, an application parameter (for example, a param parameter, an action parameter, or a uir parameter) of the second application, or the like. This is not limited in embodiments of this application.

**Table 1**

| | | | | | |
|---|---|---|---|---|---|
| First application information | Application type | Authentication type | Blocklist type | ... | |
| | HarmonyOS app: 1 | App market: 1 | Non-blocklist: 0 | ... | ... |
| | Non-wide-caliber atomic service: 2 | Service market: 2 | Blocklist: 1 | | |
| | Android app: 3 | Leftmost screen: 3 | | | |
| | Quick app: 4 | | | | |
| | Wide-caliber atomic service: 5 | Quick app center: 4 | | | |
| | N/A: 0 | Internal authentication media: 5 | | | |
| | | External authentication media: 6 | | | |
| | | Other authentication media: 7 | | | |
| | | N/A: 0 | | | |
| Second application information | Jump control type | Authentication type | Advertisement type | Household register type | ... |
| | Details page link that is opened for an app in a household register: 1 | App market: 1 | AGD Pro: 1 | Same app series: 7 | ... |
| | | Service market: 2 | ADS (PPS): 2 | | |
| | | | N/A: 0 | Same developer: 8 | |
| | | Leftmost screen: 3 | | | |
| | Bypass link: 2 | | | Same developer cluster: 9 | |
| | Another link: 3 | Quick app center: 4 | | | |
| | Quick app link: 4 | | | | |
| | N/A: 0 | Common internal media: 5 | | N/A: 0 | |
| | | External authentication media: 6 | | | |
| | | Another authentication media: 7 | | | |
| | | N/A: 0 | | | |

For both the first application and the second application, some application information may be represented by using different values, as shown in Table 1, to convert the application information into a language that can be identified by the electronic device.

For example, if the first application information indicates the application type of the first application, "1" may indicate that the first application is a HarmonyOS app, "2" may indicate that the first application is a non-wide-caliber atomic service app, "3" may indicate that the first application is an Android app, "2" may indicate that the first application is a quick app, and "5" may indicate that the first application is a wide-caliber atomic service app. If the application type of the first application does not belong to any of the foregoing application types, "0" may indicate the application type of the first application.

For another example, if the second application information indicates an advertisement type presented by the second application in the first interface corresponding to the first application, "1" may indicate that the advertisement type corresponding to the second application is AGD Pro, and "2" may indicate that the advertisement type corresponding to the second application is ADS (PPS). If the advertisement type of the second application does not belong to any one of AGD Pro or ADS (PPS), "0" may indicate the advertisement type of the second application.

In some embodiments, the management and control condition may be pre-stored in the electronic device. After receiving the first trigger operation entered by the user, the electronic device may directly call the management and control condition. Alternatively, the management and control condition may be stored in a server connected to the electronic device. After receiving the first trigger operation entered by the user, the electronic device may send, to the server, a request used to obtain the management and control condition, to obtain the management and control condition from the server.

In some embodiments, if the management and control condition is stored in the server connected to the electronic device, the electronic device may further send, to the server based on a preset time cycle, a request used to obtain the management and control condition, to update a locally obtained management and control condition. For example, the electronic device may send, to the server at an interval of 24 hours, a request used to obtain a management and control condition, to update the locally obtained management and control condition.

In some embodiments, the management and control condition is used to express a management and control scenario corresponding to an application. The management and control condition is obtained through orchestration based on at least one preset command (which may also be referred to as a DSL command in this embodiment of this application) in a preset command set (which may also be referred to as a DSL command set in this embodiment of this application). The DSL command is a command customized in this application.

The DSL command defined in this application may be shown in the following Table 2.

**Table 2**

| Instruction set | Syntax and semantic description | Example of a DSL expression statement |
|---|---|---|
| ACTION | Obtain an action | ACTION(want) |
| NOT | Logical negation | NOT(EQUAL(BUNDLENAME(want), "t")) |
| BUNDLENAME | Obtain a package name | BUNDLENAME(want) |
| ISEMPTY | Empty determining | ISEMPTY(ACTION(want)) |
| URI | Obtain the uri | URI(want) |
| AND | Logical AND operation | AND(EQUAL(BUNDLENAME(want), "t") , EQUAL(BUNDLENAME(caller/Target), "t2") |
| APPEND | Appended character | APPEND(ACTION(want), ".temp") |
| OR | Logical OR operation | OR(EQUAL(BUNDLENAME(want), "t"), EQUAL(BUNDLENAME(caller/Target), "t2") |
| EQUAL | Compare | EQUAL(BUNDLENAME(want), "com.ttt") |
| GREATER | Greater than | GREATER("A", "B") |
| LESS | Less than | LESS("A", "B") |
| PARAM | Obtain a specified param parameter | PARAM(want, "ads_network_type") |
| GET_ADS_TYPE | Advertisement authentication | GET_ADS_TYPE(want) |
| GET_DETAIL_APPID | Check whether the details page is displayed | GET_DETAIL_APPID(want) |
| GET_EXTEND_CODE | Obtain an extended scenario value | GET_EXTEND_COD(want, "extend_code_key") |
| GET_QA_PKG | Obtain the quick app package name | GET_QA_PKG(want) |
| GET_SERISE_APP | Obtain a household register | GET_SERISE_APP(BUNDLENAME(caller/ Target), BUNDLENAME(want)) |

| | list | |
|---|---|---|
| GET_SERISE_TYPE | Obtain a household register relationship | GET_SERISE_TYPE(BUNDLENAME(caller /Target), BUNDLENAME(want)) |
| GET_TAG | Obtain a package name TAG | GET_TAG(BUNDLENAME(caller/Target), "appType") |
| IS_COMMON_LINK | Common link determining | IS_COMMON_LINK(want) |
| IS_PASS_LINK | Bypass link determining | IS_PASS_LINK (want) |
| MAP | Obtain a key-value pair corresponding to the map | MAP(data."list") |
| IS_JUMP_TYPE | Jump-in, jump-out, or application internal transfer determining | IS_JUMP_TYPE(caller/Target, want, "t") |

In the foregoing table, a caller indicates a caller application. The caller application is an application corresponding to an interface displayed by the electronic device before app jumping occurs. For example, the caller application is the first application in this embodiment of this application. A target indicates a callee application. If app jumping occurs, the callee application is an application corresponding to an interface displayed by the electronic device after app jumping occurs. For example, the callee application is the second application in this embodiment of this application.

Values of "t" in different DSL commands are different, and meanings represented by the values of "t" are different. For example, for an IS_JUMP_TYPE command, IS_JUMP_TYPE (caller, want, "1") indicates jumping into the caller application, IS_JUMP_TYPE (caller, want, "2") indicates jumping out of the caller application, and IS_JUMP_TYPE (caller, want, "3") indicates that caller application internal transfer.

Based on different combinations of the DSL commands customized in this application, different management and control conditions may be obtained through orchestration.

For example, a management and control condition AND (IS_JUMP_TYPE (caller, want, "2"), EQUAL (GET_TAG (BUNDLENAME (caller), "blackListType"), "1")) may be obtained through orchestration based on the IS_JUMP_TYPE, EQUAL, AND, GET_TAG, and BUNDLENAME commands. Herein, IS_JUMP_TYPE (caller, want, "2") indicates jumping out of the caller application. "blackListType" indicates a blocklist type. With reference to Table 1, "1" may indicate a blocklist, and "0" may indicate a non-blocklist. In this case, EQUAL (GET_TAG (BUNDLENAME (caller), "blackListType"), "1") indicates that the caller application is a blocklist application. The management and control condition indicates that jumping out of the caller application is performed and that the caller application is the blocklist application. The caller application being the blocklist application means that the caller application does not have call permission on the callee application.

For another example, a management and control condition AND (IS_JUMP_TYPE (caller, want, "2"), EQUAL (GET_TAG (BUNDLENAME (caller), "blackListType"), "0")) may be obtained through orchestration based on the IS_JUMP_TYPE, EQUAL, AND, GET_TAG, and BUNDLENAME commands. With reference to Table 1, because "0" indicates a non-blocklist, EQUAL (GET_TAG (BUNDLENAME (caller), "blackListType"), "0" indicates that the caller application is a non-blocklist application. The management and control condition indicates that jumping out of the caller application is performed and that the caller application is the non-blocklist application. That the caller application is the non-blocklist application means that the caller application has call permission on the callee application.

For another example, a management and control condition OR (GET_DETAIL_APPID(want), 1), EQUAL (GET_QA_PKG (BUNDLENAME(Target), "type of household") "8")) may be further obtained through orchestration based on the GET_DETAIL_APPID, OR, EQUAL, GET_QA_PKG, and BUNDLENAME commands. Herein, "type of household" indicates a household register type. GET_DETAIL_APPID(want), 1 indicates that a details page is displayed. With reference to Table 1, the management and control condition indicates that the details page is displayed or the household register type of the callee application is the same developer type.

For another example, a management and control condition NOT ((IS_COMMON_LINK (Target, want), "1")) AND (IS_PASS_LINK (Target, want), "1") may be further obtained through orchestration based on the NOT, IS_COMMON_LINK, and IS_PASS_LINK commands. In this case, the management and control condition indicates that the jump control type of the callee application is neither a common link type nor a bypass link type.

For another example, the management and control condition AND (URI (caller, want), "0") or GREATER ((PARAM (caller, want), (PARAM (Target, want))) may be further obtained through orchestration based on AND, URI, GREATER, and PARAM commands. In this case, the management and control condition indicates that A URI (uniform resource identifier) of the caller application is not obtained, and a PARAM parameter of the caller application is greater than a PARAM parameter of the callee application.

For another example, the management and control condition AND (URI (caller, want), "0") or LESS ((PARAM (caller, want), (PARAM (Target, want))) may be further obtained through orchestration based on AND, URI, LESS, and PARAM commands. In this case, the management and control condition indicates that A URI (uniform resource identifier) of the caller application is not obtained, and a PARAM parameter of the caller application is less than a PARAM parameter of the callee application.

For another example, a management and control condition GET_SERISE_TYPE ((BUNDLENAME (Target, want), BUNDLENAME (caller, want)), "1") may be further obtained through orchestration based on the GET_SERISE_TYPE command. In this case, the management and control condition indicates that there is a household register relationship between the caller application and the callee application.

For another example, a management and control condition APPEND((ACTION (caller, want), ".temp"), "0") may be further obtained through orchestration based on the APPEND command. The management and control condition indicates that the appended character ".temp" of the caller application is not obtained.

For another example, a management and control condition IS_PASS_LINK ((Target, want), "1") may be further obtained through orchestration based on the IS_PASS_LINK command. The management and control condition indicates that the jump control type of the callee application is a bypass link type.

In some embodiments, the first management and control condition is a management and control condition corresponding to the first application information and/or the second application information in the at least one management and control condition.

For example, in a scenario in which jumping from the first application to the second application occurs, it may be determined, based on the first application information and/or the second application information, that the permission type of the first application for the second application is a blocklist. In this case, the management and control condition "jumping out of the first application and the first application being a blocklist application" may be determined as the first management and control condition.

For another example, in a scenario in which jumping from the first application to the second application occurs, it may be determined, based on the first application information and the second application information, that an advertisement type presented by the second application in the first interface corresponding to the first application is an AGD Pro type. In this case, the management and control condition "jumping out of the first application and the advertisement type corresponding to the second application being an AGD Pro type" may be determined as the first management and control condition.

In some embodiments, each management and control condition corresponds to one management and control result. The management and control result may include a first management and control result, a second management and control result, and a third management and control result. The first management and control result indicates to display prompt information. The second management and control result indicates to forbid interface jumping. The third management and control result indicates to perform interface jumping.

For example, the management and control condition that jumping out of the caller application is performed and that the caller application is a blocklist application may correspond to the second control result.

The management and control condition that jumping out of the caller application is performed and that the caller application is a non-blocklist application may correspond to the third control result.

The management and control condition that the details page is displayed or that the household register type of the callee application is the same developer type may correspond to the first control result.

The management and control condition that the jump control type of the callee application is neither the common link type nor the bypass link type may correspond to the second control result.

The management and control condition that the URI (uniform resource identifier) of the caller application is not obtained and that the PARAM parameter of the caller application is greater than the PARAM parameter of the callee application may correspond to the second control result.

The management and control condition that the URI of the caller application is not obtained and that the PARAM parameter of the caller application is less than the PARAM parameter of the callee application may correspond to the second control result.

The management and control condition that there is a household register relationship between the caller application and the callee application may correspond to the third control result.

The management and control condition that the appended character ".temp" of the caller application is not obtained may correspond to the first control result.

The management and control condition that the jump control type of the callee application is the bypass link type may correspond to the first control result.

In some embodiments, a correspondence between each management and control condition and a management and control result may be preset in the electronic device. Alternatively, a correspondence between each management and control condition and a management and control result may be set in the server. The electronic device may obtain a correspondence between each management and control condition and a management and control result from the server.

In some embodiments, the electronic device may obtain, based on the determined first management and control condition, a management and control result corresponding to the first management and control condition. The electronic device may perform a corresponding response based on the management and control result corresponding to the first management and control condition.

In some embodiments, if the management and control result corresponding to the first management and control condition is the first management and control result, the electronic device may display first prompt information in the first interface. The first prompt information is used to obtain permission to jump to and display the second interface.

If the electronic device receives a second trigger operation that is entered by the user and that indicates that the electronic device is allowed to jump, the electronic device may jump to and display the second interface in response to the second trigger operation. In other words, after the electronic device receives the second trigger operation, app jumping and interface switching occur.

If the electronic device receives a third trigger operation that is entered by the user and that indicates to forbid jumping, the electronic device may close the first prompt information in response to the third trigger operation, and keep displaying the first interface. In other words, after the electronic device receives the third trigger operation, app jumping and interface switching do not occur.

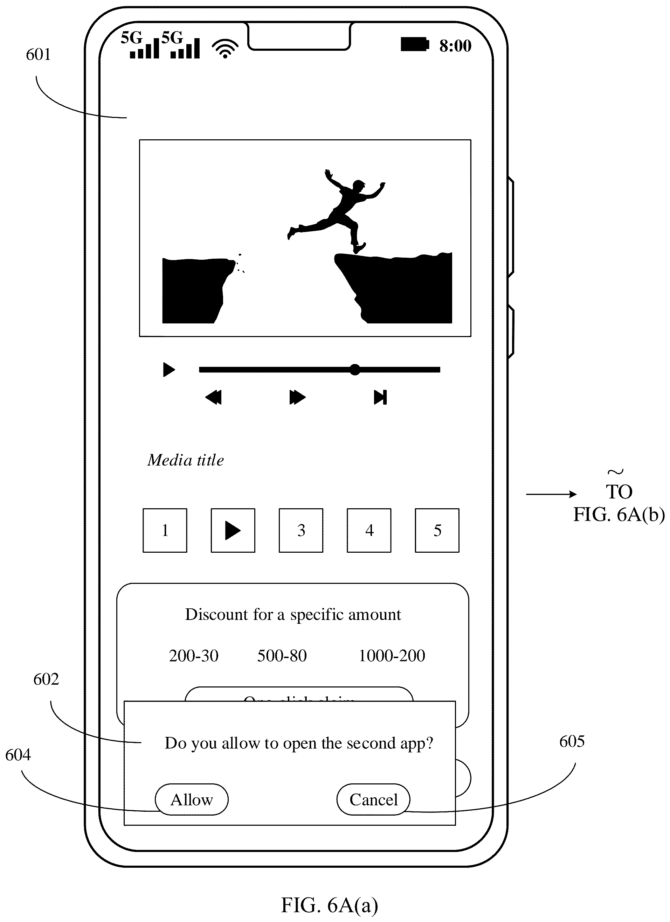

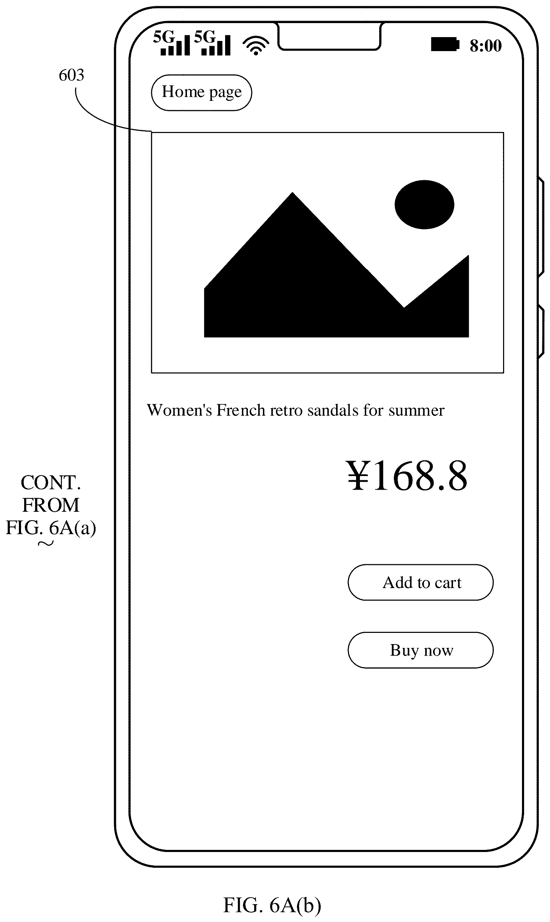

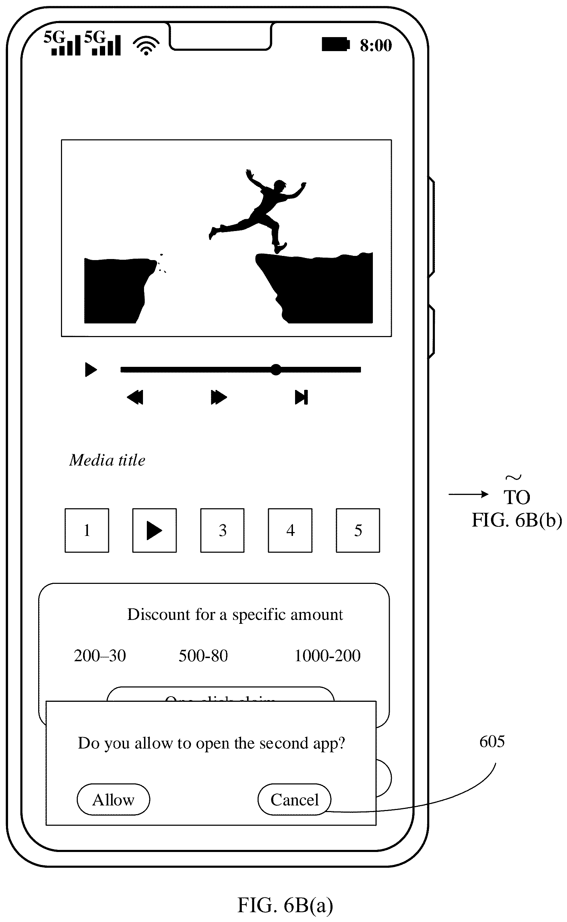

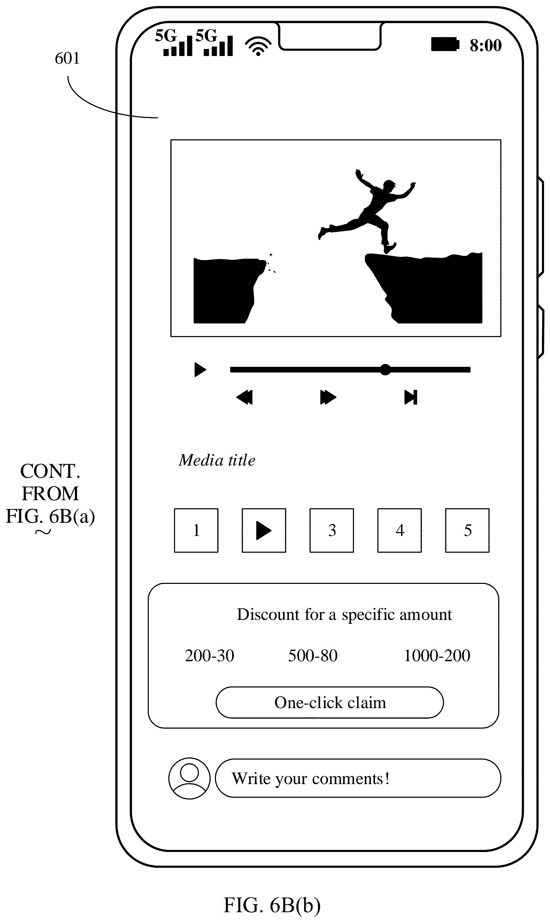

For example, refer to FIG. 6A(a) and FIG. 6A(b), or FIG. 6B(a) and FIG. 6B(b). The electronic device may display first prompt information 602 in a first interface 601. The first prompt information 602 may be displayed in a pop-up window form. The first prompt information 602 includes a first control 604 corresponding to an indication indicating that jumping is allowed and a second control 605 corresponding to an indication indicating that jumping is forbidden.

Still refer to FIG. 6A(a) and FIG. 6A(b). The user may tap the first control 604 to enter the second trigger operation to the electronic device. In response to the second trigger operation, the electronic device may perform app jumping, and display a second interface 603 corresponding to a second application.

Alternatively, still refer to FIG. 6B(a) and FIG. 6B(b). The user may tap the second control 605 to input the third trigger operation to the electronic device. In response to the third trigger operation, the electronic device may close the first prompt information 602, and keep displaying the first interface 601.

In some embodiments, if the management and control result corresponding to the first management and control condition is the second management and control result, the electronic device may not perform app jumping, and still keep displaying a current interface. In other words, the electronic device still keeps displaying the first interface.

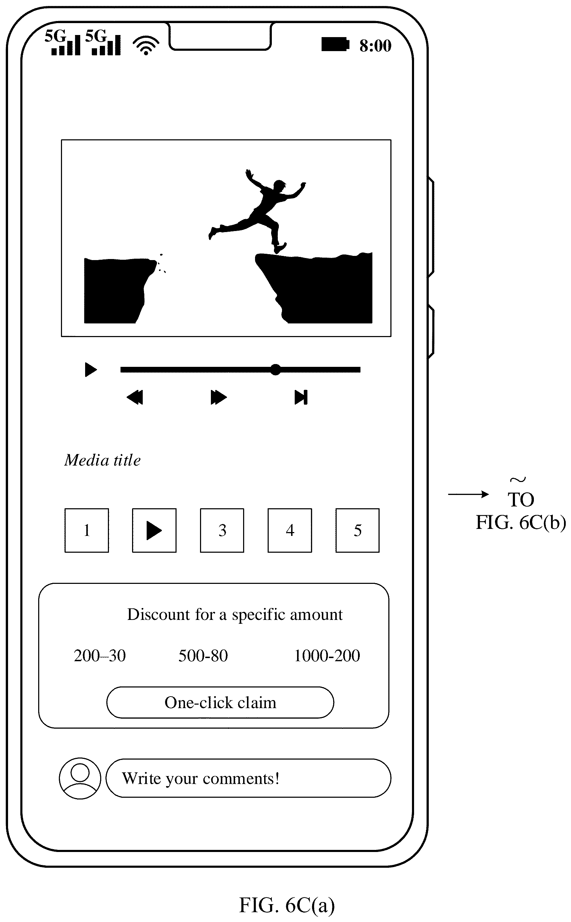

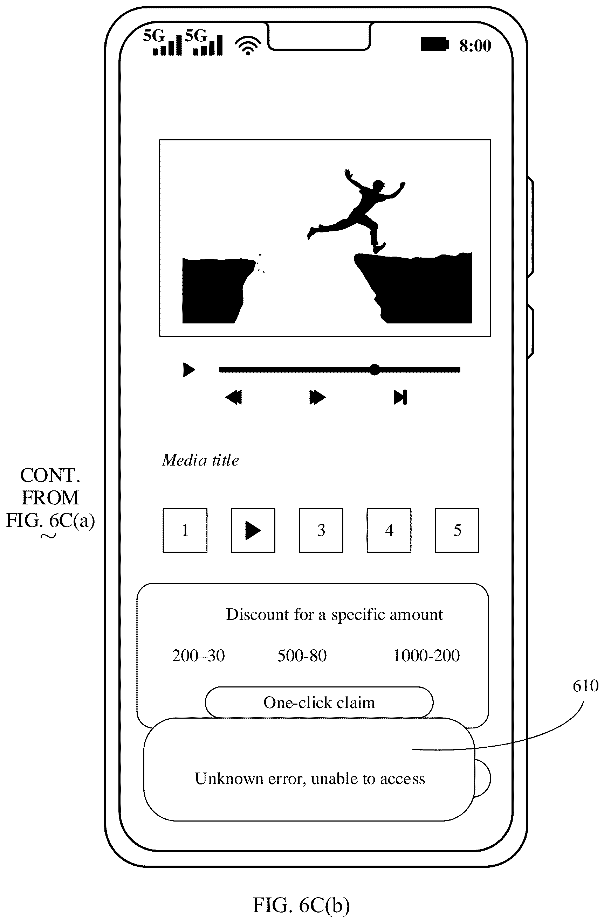

Optionally, refer to FIG. 6C(a) and FIG. 6C(b). If the management and control result corresponding to the first management and control condition is the second management and control result, the electronic device may not perform app jumping, and display prompt information 610 indicating that jumping fails in a currently displayed interface.

In some embodiments, if the management and control result corresponding to the first management and control condition is the third management and control result, the electronic device may perform app jumping, and display a second interface.

In some embodiments, if the electronic device performs app jumping and displays the second interface, the second interface includes a jump link corresponding to a third application. The user may perform a fourth trigger operation on the jump link corresponding to the third application. The fourth trigger operation indicates to jump to and display the third interface corresponding to the third application. The third application is different from the second application, and the third application may be the same as or different from the first application.

In response to the received fourth trigger operation, the electronic device may obtain second application information corresponding to the second application and third application information corresponding to the third application. The electronic device may determine a second management and control condition from the at least one management and control condition based on the second application information and/or the third application information. After obtaining a management and control result corresponding to the second management and control condition, the electronic device may make a corresponding response based on the management and control result corresponding to the second management and control condition. For the electronic device to make a corresponding response based on the management and control result corresponding to the second management and control condition, refer to the descriptions of the electronic device making a corresponding response based on the management and control result corresponding to the first management and control condition in the foregoing embodiments. Details are not described herein again.

In the method provided in this embodiment of this application, when receiving the first trigger operation entered by the user in the first interface, the electronic device may determine the first management and control condition based on the first application information and/or the second application information, and perform a corresponding response based on the management and control result corresponding to the first management and control condition, to determine whether to perform app jumping. This can reduce a quantity of times that the electronic device is attacked due to app jumping, and improve security.

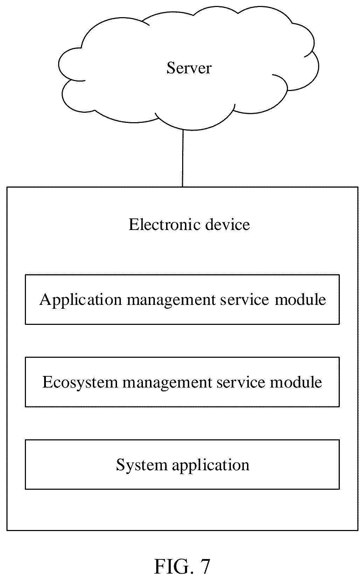

In some embodiments, an embodiment of this application further provides a management and control system of an application. As shown in FIG. 7, the system includes a server and an electronic device. A communication connection is established between the server and the electronic device, and an information interaction may be performed. The electronic device may include an application management service module (which may also be referred to as an AMS module in this embodiment of this application), an ecosystem management service module (which may also be referred to as an ERMS module in this embodiment of this application), and a system application (which may also be referred to as an APPGallery in this embodiment of this application).

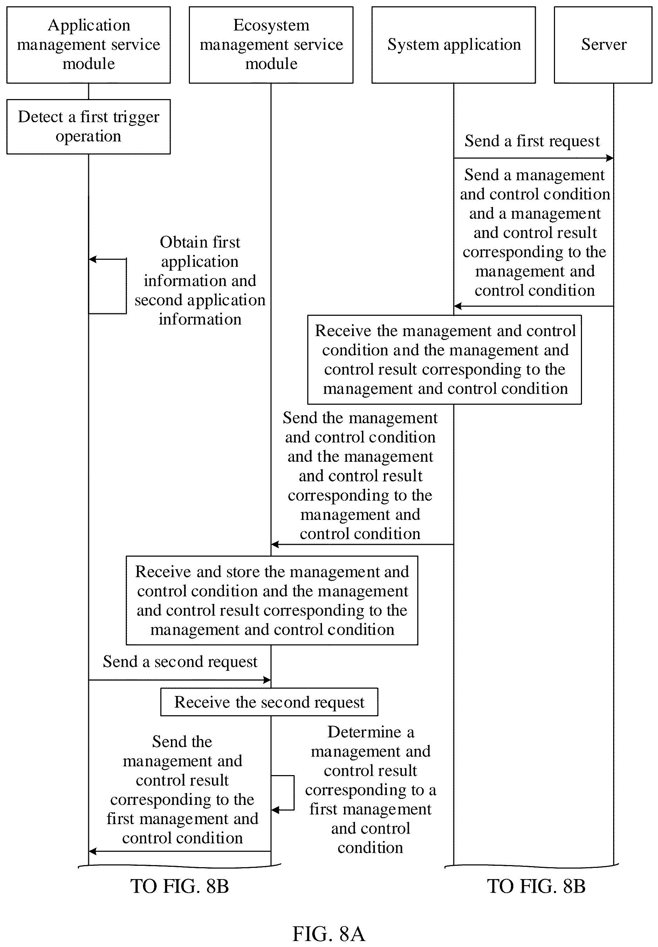

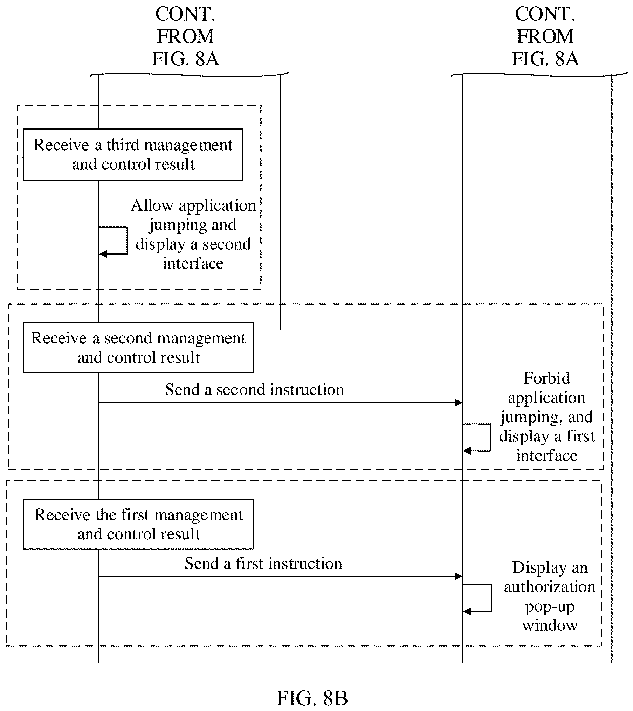

The following describes in detail the management and control system provided in embodiments of this application with reference to FIG. 7 and FIG. 8A and FIG. 8B.

In some embodiments, the server stores at least one management and control condition, and each management and control condition corresponds to one management and control result. The management and control condition is obtained through orchestration based on at least one DSL command in the DSL command set provided in embodiments of this application. For descriptions of the DSL command, refer to the descriptions in the foregoing embodiments. Details are not described herein again. The management and control result includes a first management and control result, a second management and control result, and a third management and control result. For descriptions of the management and control result, refer to the descriptions in the foregoing embodiments. Details are not described herein again.

The APPGallery may send, to the server, a first request used to obtain the management and control condition and the management and control result corresponding to the management and control condition. After receiving the management and control condition and the management and control result corresponding to the management and control condition that are sent by the server, the APPGallery may send, to the ERMS module, the management and control condition and the management and control result corresponding to the management and control condition. The ERMS module may receive and store the management and control condition and the management and control result corresponding to the management and control condition that are sent by the APPGallery, to wait for subsequent call.

In some embodiments, the APPGallery may send, to the server based on a preset time cycle, the first request used to obtain the management and control condition and the management and control result corresponding to the management and control condition. Each time after receiving the management and control condition and the management and control result corresponding to the management and control condition that are sent by the server, the APPGallery may send, to the ERMS module, the received management and control condition and the received management and control result corresponding to the management and control condition, to update a management and control condition and a management and control result corresponding to the management and control condition that are stored in the ERMS module.

In some embodiments, when detecting that the electronic device receives the first trigger operation entered by the user in the first interface, the AMS module may obtain the first application information and the second application information, and send, to the ERMS module, a second request used to obtain a management and control result corresponding to a first management and control condition. The second request carries the first application information and the second application information. The first management and control condition is associated with the first application information and/or the second application information.

After receiving the second request sent by the AMS module, the ERMS module may determine the first management and control condition in stored management and control conditions based on the first application information and/or the second application information, to further obtain the management and control result corresponding to the first management and control condition. Then, the ERMS module may send, to the AMS module, the management and control result corresponding to the first management and control condition.

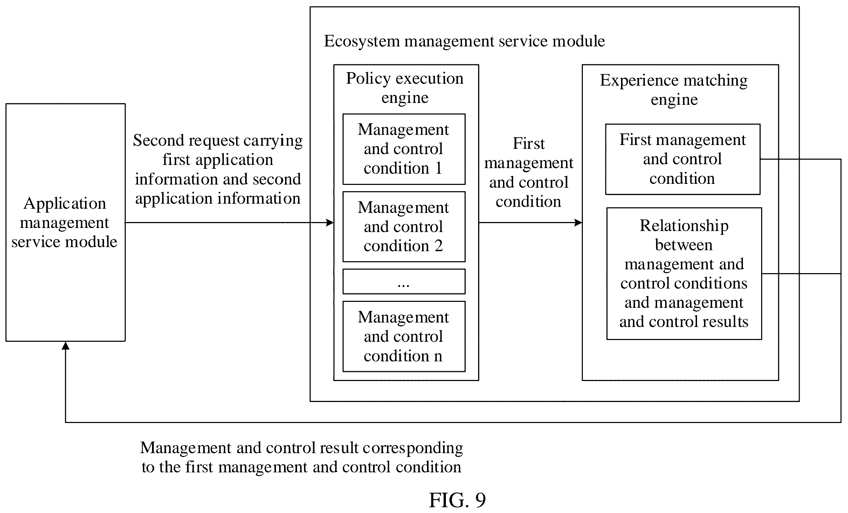

Refer to FIG. 9. The ERMS module may include a policy execution engine and an experience matching engine. The policy execution engine may determine the first management and control condition in the stored management and control conditions (for example, a management and control condition 1 to a management and control condition n) based on the first application information and/or the second application information sent by the AMS module. The experience matching engine may obtain, based on a correspondence between each management and control condition and a management and control result, the management and control result corresponding to the first management and control condition. Then, the experience matching engine may send, to the AMS module, the obtained management and control result corresponding to the first management and control condition.

In some embodiments, the AMS module may execute a corresponding response based on the management and control result received from the ERMS module.

In some embodiments, if the management and control result received by the AMS module from the ERMS module is the first management and control result, the AMS module may send a first instruction to the APPGallery. In response to the received first instruction, the APPGallery may control displaying, in the first interface, the prompt information used to obtain the permission to jump to and display the second interface.

If the APPGallery detects a second trigger operation entered by the user for the prompt information, the APPGallery may allow the electronic device to perform app jumping, to display the second interface.

If the APPGallery detects a third trigger operation entered by the user for the prompt information, the APPGallery may forbid the electronic device to perform app jumping, and close the prompt information, to display the first interface.

In some embodiments, if the management and control result received by the AMS module from the ERMS module is the second management and control result, the AMS module may send the second instruction to the APPGallery. In response to the received second instruction, the APPGallery may forbid the electronic device to perform app jumping, to keep displaying the first interface.

In some embodiments, if the management and control result received by the AMS module from the ERMS module is the third management and control result, the electronic device may be allowed to perform app jumping, to switch the displayed interface to the second interface. The AMS module may send, to the first application, an instruction indicating to perform interface jumping. After receiving the instruction that is sent by the AMS module and that indicates to perform interface jumping, the first application may call the second application, to display the second interface corresponding to the second application.

In some solutions, a plurality of embodiments of this application may be combined, and a combined solution is implemented. Optionally, some operations in the processes of the method embodiments are optionally combined, and/or a sequence of some operations is optionally changed. In addition, an execution sequence between steps of each process is merely an example, and does not constitute a limitation on an execution sequence between the steps. The steps may alternatively be performed in another execution sequence. It is not intended to indicate that the execution order is the only order in which these operations can be performed. A person of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

It may be understood that, to implement the foregoing functions, the electronic device includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each specific application with reference to embodiments, but it should not be considered that the implementation goes beyond the scope of this application.

In this embodiment, the electronic device may be divided into functional modules based on the foregoing method examples. For example, functional modules may be obtained through division in correspondence to functions, or at least two functions may be integrated into one processing module. The integrated module may be implemented in a form of hardware. It should be noted that module division in embodiments is an example and is merely logical function division. In practice, there may be another division manner.

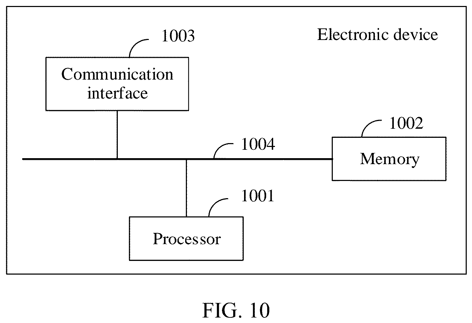

An embodiment of this application further provides an electronic device. As shown in FIG. 10, the electronic device may include one or more processors 1001, a memory 1002, and a communication interface 1003.

The memory 1002 and the communication interface 1003 are coupled to the processor 1001. For example, the memory 1002, the communication interface 1003, and the processor 1001 may be coupled together through a bus 1004.

The communication interface 1003 is configured to perform data transmission with another device. The memory 1002 stores computer program code. The computer program code includes computer instructions. When the computer instructions are executed by the processor 1001, the electronic device is enabled to perform the application management method in embodiments of this application.

The processor 1001 may be a processor or a controller, for example, a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The processor may implement or execute various example logical blocks, modules, and circuits described with reference to content of the present disclosure. The processor may be a combination of processors implementing a computing function, for example, a combination of one or more microprocessors, or a combination of the DSP and a microprocessor. The processor may be configured to support the electronic device in performing the method steps provided in the foregoing embodiments.

The bus 1004 may be a peripheral component interconnect (Peripheral Component Interconnect, PCI) bus, an extended industry standard architecture (Extended Industry Standard Architecture, EISA) bus, or the like. The bus 1004 may be categorized as an address bus, a data bus, a control bus, or the like. For ease of representation, only one thick line is for representing the bus in FIG. 10, but this does not mean that there is only one bus or only one type of bus.

An embodiment of this application further provides a chip system, including a processor, the processor is coupled to a memory, and the memory is configured to store a program or instructions. When the program or the instructions is/are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this embodiment of this application.

For example, the chip system may be a field programmable gate array (field programmable gate array, FPGA), an application-specific integrated circuit (Application-specific integrated circuit, ASIC), a system-on-a-chip (system-on-a-chip, SoC), a central processing unit (central processing unit, CPU), a network processor (network processor, NP), a digital signal processing circuit (digital signal processor, DSP), a microcontroller unit (microcontroller unit, MCU), a programmable controller (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer-readable storage medium. The computer storage medium stores computer program code. When the processor executes the computer program code, an electronic device performs related method steps in the foregoing method embodiments.

An embodiment of this application further provides a computer program product. When the computer program product runs on a computer, the computer is caused to perform related method steps in the foregoing method embodiments.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is enabled to perform the scenario configuration method in the foregoing method embodiments.

The apparatus, the computer-readable storage medium, the computer program product, or the chip provided in embodiments of this application is configured to perform the corresponding method provided above. Therefore, for beneficial effect that can be achieved, refer to the beneficial effect in the corresponding method provided above. Details are not described herein again.

Methods or algorithm steps described in combination with the content disclosed in this embodiment of this application may be implemented by hardware, or may be implemented by a processor by executing a software instruction. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may alternatively be a component in the processor. The processor and the storage medium may be located in an application-specific integrated circuit (Application-specific integrated circuit, ASIC).

The description of the foregoing implementations allows a person skilled in the art to clearly understand that, for the purpose of convenient and brief description, division of the foregoing functional modules is used as merely an example for description. During actual application, the foregoing functions can be allocated to different functional modules for implementation based on a requirement. That is, an internal structure of the apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed apparatus and method may be implemented in other manners. For example, the described apparatus embodiment is merely an example. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

## Claims

1. An application management and control method, applied to an electronic device, wherein the electronic device stores a correspondence between at least one management and control condition and a management and control result, each management and control condition corresponds to one management and control result, and the method comprises:
receiving a first trigger operation for a first interface, wherein the first interface corresponds to a first application, the first trigger operation indicates to jump to and display a second interface, the second interface corresponds to a second application, and the first application is different from the second application;
in response to the first trigger operation, determining a first management and control condition from the at least one management and control condition based on first application information corresponding to the first application and/or second application information corresponding to the second application;
displaying first prompt information based on a management and control result corresponding to the first management and control condition, wherein the first prompt information indicates to obtain permission to jump to and display the second interface;
receiving a second trigger operation for the first prompt information, wherein the second trigger operation indicates to allow jumping to and displaying the second interface; and
jumping to and displaying the second interface in response to the second trigger operation.

2. The method according to claim 1, wherein the first application information comprises at least one of an application type and an authentication type of the first application, and call permission of the first application for the second application;
the second application information comprises at least one of an authentication type, an advertisement type, and a jump control type of the second application, and a home type of the second application; and
the first interface comprises an advertisement and a jump control that are associated with the second application, the jump control type is a type of the jump control that is associated with the second application and that is comprised in the first interface, and the advertisement type of the second application is a type of the advertisement that is associated with the second application and that is comprised in the first interface.

3. The method according to claim 1 or 2, wherein after displaying the first prompt information, the method further comprises:
receiving a third trigger operation for the first prompt information, wherein the third trigger operation indicates to forbid jumping to and displaying the second interface; and
in response to the third trigger operation, closing the first prompt information, and keeping displaying the first interface.

4. The method according to any one of claims 1 to 3, wherein the management and control result comprises a first management and control result, a second management and control result, and a third management and control result, the first management and control result indicates to display prompt information, the second management and control result indicates to forbid interface jumping, and the third management and control result indicates to perform interface jumping; and
displaying the first prompt information based on the management and control result corresponding to the first management and control condition comprises:
if the management and control result corresponding to the first management and control condition is the first management and control result, displaying the first prompt information in the first interface.

5. The method according to claim 4, wherein the method further comprises:
if the management and control result corresponding to the first management and control condition is the second management and control result, keeping displaying the first interface; and
if the management and control result corresponding to the first management and control condition is the third management and control result, jumping to and displaying the second interface.

6. The method according to any one of claims 1 to 5, wherein after jumping to and displaying the second interface, the method further comprises:
receiving a fourth trigger operation for the second interface, wherein the fourth trigger operation indicates to jump to and display a third interface, the third interface corresponds to a third application, and the third application is different from the second application;
in response to the fourth trigger operation, determining a second management and control condition from the at least one management and control condition based on the second application information corresponding to the second application and/or third application information corresponding to the third application; and
displaying second prompt information based on a management and control result corresponding to the second management and control condition, wherein the second prompt information indicates to obtain permission to jump to and display the third interface.

7. The method according to any one of claims 1 to 6, wherein if a target management and control condition in the at least one management and control condition is that a caller application has call permission on a callee application, a management and control result corresponding to the target management and control condition indicates to perform interface jumping; or
if a target management and control condition in the at least one management and control condition is that a caller application does not have call permission on a callee application, a management and control result corresponding to the target management and control condition indicates to forbid interface jumping.

8. The method according to any one of claims 1 to 7, wherein if the target management and control condition in the at least one management and control condition is that a jump control type of the caller application is a bypass link type, the management and control result corresponding to the target management and control condition indicates to display prompt information.

9. The method according to any one of claims 1 to 8, wherein the management and control condition is obtained through orchestration based on at least one preset command.

10. The method according to any one of claims 1 to 9, wherein the method further comprises:
obtaining the at least one management and control condition from a server based on a preset time cycle.

11. The method according to any one of claims 1 to 3, wherein the electronic device comprises an application management service module and an ecosystem management service module, a system application is installed in the electronic device, and after receiving the first trigger operation for the first interface, the method further comprises:
obtaining, by the application management service module, the first application information corresponding to the first application and the second application information corresponding to the second application;
determining the first management and control condition from the at least one management and control condition based on the first application information corresponding to the first application and/or the second application information corresponding to the second application comprises:
determining, by the ecosystem management service module, the first management and control condition from the at least one management and control condition based on the first application information and/or the second application information;
after determining the first management and control condition from the at least one management and control condition, the method further comprises:
obtaining, by the ecosystem management service module based on the correspondence between the at least one management and control condition and the management and control result, the management and control result corresponding to the first management and control condition; and
jumping to and displaying the second interface comprises:
jumping to and displaying, by the system application, the second interface.

12. The method according to claim 11, displaying the first prompt information based on the management and control result corresponding to the first management and control condition comprises:
displaying, by the system application, the first prompt information if the management and control result indicates to display prompt information; and
the method further comprises:
if the management and control result indicates to forbid interface jumping, displaying, by the system application, the first interface; or
if the management and control result indicates to perform interface jumping, jumping to and displaying, by the first application, the second interface.

13. An electronic device, comprising a memory and one or more processors, wherein the memory is coupled to the processor, the memory stores computer program code, the computer program code comprises computer instructions, and when the computer instructions are executed by the processor, the electronic device performs the method according to any one of claims 1 to 12.

14. A computer-readable storage medium, comprising computer instructions, wherein when the computer instructions are run on an electronic device, the electronic device is enabled to perform the method according to any one of claims 1 to 12.

15. A computer program product, wherein when the computer program product runs on a computer, the computer is enabled to perform the method according to any one of claims 1 to 12.
